# EUROPÄISCHE PATENTANMELDUNG

(11) **EP 0 744 447 A2**
(43) Veröffentlichungstag der Anmeldung: **27.11.1996**
(21) Anmeldenummer: 96108470.4
(22) Anmeldetag: 28.05.1996
(51) Int. Cl.: C09D 5/34

(54) **Strukturkitt**

(30) Priorität: 25.05.1995 DE 19519243
(71) Anmelder: CT-Chemie GmbH, 90613 Grosshabersdorf (DE)
(72) Erfinder: Raff, Francescon, 90547 Stein (DE)
(74) Vertreter: Bunse, Günter, Dr.

(57) **Zusammenfassung**

Gegenstand der Erfindung ist ein Strukturkitt auf Basis von kalthärtenden 2-Komponenten-Polyesterharzen oder kalthärtenden 2-Komponenten-Epoxidharzen.
Der erfindungsgemäße Strukturkitt ist gekennzeichnet durch einen Gehalt an
(a) 60 bis 80 Gew.-% Bindemittel
(b) 5 bis 30 Gew.-% anorganischen Füllstoffen
(c) 0.5 bis 5 Gew.-% Pigmente und
(d) 10 bis 30 Gew.-% Strukturstoffe.

Die Strukturstoffe sind ein Gemisch von anorganischen Stoffen, und zwar von Perlmutt und Muschelkalk oder von Perlmutt, Muschel- und Korallenkalk.
Die Strukturstoffe haben eine Korngröße von 50 my bis 3 mm.
Der Strukturkitt dient als Fugenmaterial für Platten auf Basis von Kunst- und Natursteinen oder als Ausbesserungsmaterial bzw. Ausfüllungsmaterial für schadhafte Stellen an derartigen Steinen.

## Beschreibung

Gegenstand der vorliegenden Erfindung ist ein Strukturkitt auf Basis von kalthärtenden 2-Komponenten-Polyesterharzen oder kalthärtenden 2-Komponenten-Epoxidharzen.
Unter kalthärtenden 2-Komponenten-Polyesterharzen sind hier zu verstehen ungesättigte Polyesterharze (U.P.-Harze) aus mehrbasigen, ungesättigten Carbonsäuren, wie Maleinsäure, Fumarsäure, Itakonsäure oder deren Anhydride, und gesättigten zweiwertigen Alkoholen, wie Äthylenglykol, Diglykol oder 1,3 Butylenglykol, (Komponente 1), die mit einem Monomeren, wie Styrol oder alpha-Methylstyrol, (Komponente 2), vernetzt sind.

Unter 2-Komponenten-Epoxid-Harzen sind hier zu verstehen Polykondensationsprodukte aus Epichlorhydrin und Polyolen, wie Bisphenol A, (Komponente 1),die mit polyfunktionellen Verbindungen, die mit der Epoxidgruppe reagieren, wie Polyaminen, Dicarbonsäuren oder Anhydriden, (Komponente 2), vernetzt sind.

Bindemittel auf Basis von Polyester- und Epoxidharzen mit einem Zusatz an Füllstoffen und Pigmenten sind an sich bekannt und finden als Kittmasse Verwendung, u.a. als Fugenmaterial für Platten auf Basis von Kunst- oder Natursteinen oder als Ausbesserungsmaterial bzw. Ausfüllungsmaterial für schadhafte Stellen an derartigen Steinen. Die ausgefüllten Fugen bzw. Stellen müssen allerdings nach der Aushärtung der Kittmasse in vielen Fällen der Ebene des Steinmateriales angepaßt, d.h. plangeschliffen, und poliert werden.
Die ausgehärtete Kittmasse ist aber erheblich weicher als der Stein. Ein gleichmäßiges Niveau zwischen Kitt und Stein läßt sich aus diesem Grunde praktisch nicht herstellen.
Es kommt hinzu, daß der Kitt nach der Aushärtung noch eine ziemlich klebrige Oberflache hat und daß dadurch der Schleifvorgang insofern beeinträchtigt wird, als sich die Schleifsegmente immer wieder zusetzen.
Der Einsatz der Kittmasse bringt also einen großen Arbeitsaufwand mit sich und ist mit entsprechend hohen Kosten verbunden. Hierdurch wird der Einsatz der Kittmasse eingeschränkt; ein Umstand, den man gerne vermeiden möchte.

Man ist außerdem bestrebt, die Fugen und insbesondere die ausgebesserten Stellen nicht nur farblich, sondern auch strukturell dem Steinmaterial insoweit anzupassen, daß man die ausgefüllten Fugen und ausgebesserten Stellen nicht mehr so ohne weiteres erkennen, d.h. von dem Steinmaterial nicht mehr unterscheiden kann.
Die Anpassung ist besonders bei Natursteinen, wie Marmor, ein schwieriges Unterfangen.
Dieses Problem konnte aber schließlich dadurch gelöst werden, indem man dem Bindemittel - neben Füllstoffen und Pigmenten - ein Gemisch von Perlmutt und Muschelkalk oder von Perlmutt, Muschel- und Korallenkalk zugegeben hat.
Überraschenderweise hat sich dabei herausgestellt, daß - wenn man bestimmte Mengenverhältnisse von Bindemittel zu Füllstoffen, Pigmenten und Strukturstoffen einhält - man nach der Aushärtung einen Strukturkitt erhält, der sich dadurch auszeichnet, daß er sich erheblich leichter (ab)schleifen läßt als die bisher bekannten, zu den oben erwähnten Zwecken verwendeten Kitte und außerdem eine deutlich verminderte Oberflächenklebrigkeit aufweist, sodaß die damit verbundenen oben erwähnten Mängel nicht mehr gravierend sind. Die beigemengten Strukturstoffe tragen offensichtlich dazu bei, daß eine rauhe Kittoberfläche entsteht. Das hat den Vorteil, daß beim Schleifvorgang die Schleifsegmente eine bessere Griffigkeit zum Strukturkitt erhalten als wie es bei den bisher verwendeten Kitten der Fall ist. Die Schleifsegmente werden durch den Strukturkitt sogar noch geschärft, sodaß man den Strukturkitt geradezu als abrasivfreudig qualifizieren kann.

Gegenstand der Erfindung ist somit ein Strukturkitt auf Basis von kalthärtenden 2-Komponenten-Polyesterharzen oder auf Basis von kalthärtenden 2-Komponenten-Epoxidharzen als Bindemittel und mit Füllstoffen und Pigmenten.
Der Strukturkitt ist dadurch gekennzeichnet, daß er einen Gehalt an
(a) 60 bis 80 Gew.-% Bindemittel
(b) 5 bis 30 Gew.-% anorganischen Füllstoffen
(c) 0,5 bis 5 Gew.-% Pigmenten und
(d) 10 bis 30 Gew.-% Strukturstoffen
aufweist.
Der erfindungsgemäße Strukturkitt enthält 5 bis 30 Gew.-% anorganische Füllstoffe. Als Füllstoffe kommen Kaolin, Quarz, Glimmer, Schwerspat und Talkum oder Gemische davon in Frage. Besonders geeignet ist ein Gemisch von Kaolin und Talkum.
Die Füllstoffe weisen eine Korngröße von bis zu 60 my auf. Korngrößen von bis zu 30 my sind bevorzugt.
Der erfindungsgemäße Strukturkitt enthält ferner 0.5 bis 5 Gew.-% Pigmente.
Die Pigmente bestehen aus einem Gemisch von anorganischen Pigmenten und Phthalocyanin.
Für das Gemisch kommen sowohl natürliche anorganische als auch künstliche anorganische Pigmente in Frage.
Natürliche anorganische Pigmente sind beispielsweise Kreide, Ocker, Umbra, Grünerde, Eisenoxid oder Graphit.
Künstliche anorganische Pigmente sind beispielsweise Titandioxid, Chromgelb, Mennige, Ultramarin oder Ruß.
Bevorzugt ist ein Gemisch aus Titandioxid, Eisenoxid und Ruß.
Es versteht sich von selbst, daß die Zusammensetzung der Pigmente nach Art und Menge sich nach der gewünschten Farbgebung richtet.
Die Pigmente weisen eine Korngröße von 10 bis 50 my auf.
Der erfindungsgemäße Strukturkitt enthält ferner 10 bis 30 Gew.-% Strukturstoffe.
Als Strukturstoffe kommt ein Gemisch von anorganischen Stoffen, und zwar von Perlmutt- und Muschelkalk oder von Perlmutt, Muschel- und Korallenkalk, in Frage.
Ein Gemisch von Perlmutt, Muschel- und Korallenkalk ist bevorzugt. Der Anteil an Korallenkalk im Gemisch macht vorzugsweise ein Gew.-Drittel des Gesamtgemisches aus.

Die Strukturstoffe weisen eine Korngröße von 50 my bis 3 mm auf. Bevorzugt ist eine Korngröße von 50 my bis 1,5 mm.

Die folgenden Beispiele erläutern die Erfindung:

### Beispiel 1

Zu 42 g eines ungesättigten Polyesterharzes (Polykondensationsprodukt auf Basis von Maleinsäureanhydrid und Diglykol) werden 36 g Füllstoffe, und zwar 12 g Kaolin, 12 g Talkum und 12 g Ouarz, 4 g Pigmente, und zwar 1 g Titandioxid, 1,5 g Eisenoxid, 1 g Ruß und 0,5 g Phthalocyanin, und 40 g Strukturstoffe, und zwar 20 g Perlmutt und 20 g Muschelkalk, gegeben und fein verteilt bzw. dispergiert.
Das erhaltene Produkt wird anschließend in 78 g Styrol, das 0,4 g Dibenzoylperoxid enthält, "gelöst".
Die Aushärtung des Strukturkittes erfolgt bei Raumtemperatur und ist im wesentlichen nach 70 min. beendet.

### Beispiel 2

Zu 44 g eines Polykondensationsproduktes auf Basis von Epichlorhydrin und Bisphenol A werden 36 g Füllstoffe, und zwar 18 g Kaolin und 18 g Talkum, 4 g Pigmente, und zwar 1 g Titandioxid, 1,5 g Eisenoxid, 1 g Ruß und 0,5 g Phthalocyanin, 40 g Strukturstoffe, und zwar 15 g Perlmutt, 10 g Muschelkalk und 15 g Korallenkalk, gegeben und fein verteilt bzw. dispergiert.
Das erhaltene Produkt wird anschließend in 76 g Äthanolamin gegeben.
Die Aushärtung des Strukturkittes erfolgt bei Raumtemperatur und ist im wesentlichen nach 70 min. beendet.

## Patentansprüche

1. Strukturkitt auf Basis von kalthärtenden 2-Komponenten-Polyesterharzen oder auf Basis von kalthärtenden 2-Komponenten-Epxoxidharzen als Bindemittel und mit Füllstoffen und Pigmenten, gekennzeichnet durch einen Gehalt an
(a) 60 bis 80 Gew.% Bindemittel
(b) 5 bis 30 Gew.% anorganischen Füllstoffen
(c) 0,5 bis 5 Gew.% Pigmenten und
(d) 10 bis 30 Gew.% Strukturstoffen.

2. Strukturkitt gemäß Anspruch 1, dad. gek., daß das Bindemittel ein ungesättigtes Polykondensationsprodukt aus einer mehrbasigen, ungesättigten Carbonsäure oder deren Anhydrid und einem gesättigten, zweiwertigen Alkohol ist, das mit einem Monomeren vernetzt ist.

3. Strukturkitt gemäß Anspruch 2, dad. gek., daß das Polykondensationsprodukt ein Produkt aus Maleinsäure oder deren Anhydrid und Diglykol ist, das mit Styrol vernetzt ist.

4. Strukturkitt gemäß Anspruch 2, dad. gek., daß das Polykondensationsprodukt ein Produkt aus Fumarsäure oder deren Anhydrid und Äthylenglykol ist, das mit alpha-Metylstyrol vernetzt ist.

5. Strukturkitt gemäß Anspruch 1, dad. gek., daß das Bindemittel ein Polykondensationsprodukt aus Epichlorhydrin und Polyolen ist, das mit polyfunktionellen Verbindungen, die mit der Epoxidgruppe reagieren, vernetzt ist.

6. Strukturkitt gemäß Anspruch 5, dad. gek., daß das Polyol Bisphenol A ist.

7. Strukturkitt gemäß Anspruch 5 und 6, dad. gek., daß die mit der Epoxidgruppe reagierende Verbindung Äthanolamin ist.

8. Strukturkitt gemäß Anspruch 7, dad. gek., daß die Füllstoffe ein Gemisch von Kaolin und Talkum sind.

9. Strukturkitt gemäß Anspruch 7, dad. gek., daß die Füllstoffe eine Korngröße von bis zu 60 my aufweisen.

10. Strukturkitt gemäß Anspruch 9, dad. gek., daß die Korngröße bis zu 30 my beträgt.

11. Strukturkitt gemäß Ansprüche 1 bis 10, dad gek., daß die Pigmente aus einem Gemisch von anorganischen Pigmenten und Phthalocyanin bestehen.

12. Strukturkitt gemäß Anspruch 11, dad. gek., daß das Gemisch aus Titandioxid, Eisenoxid und Ruß besteht.

13. Strukturkitt gemäß Anspruch 11 und 12, dad. gek., daß die Pigmente eine Korngröße von 10 bis 50 my aufweisen.

14. Strukturkitt gemäß Ansprüche 1 bis 13, dad. gek., daß die Strukturstoffe ein Gemisch von anorganischen Stoffen, und zwar von Perlmutt, Muschel- und Korallenkalk, sind.

15. Strukturkitt gemäß Anspruch 14, dad. gek., daß die Strukturstoffe eine Korngröße von 50 my bis 3 mm aufweisen.

16. Strukturkitt gemäß Anspruch 15, dad. gek., daß die Korngröße 50 my bis 1.5 mm beträgt.
